# EUROPEAN PATENT APPLICATION

(11) **EP 1 785 818 A2**
(43) Date of publication of application: **16.05.2007**
(21) Application number: 06123258.3
(22) Date of filing: 31.10.2006
(51) Int. Cl.: G06F 3/033

(54) **Apparatus and method for recognizing and transmitting handwritten data in a mobile communication terminal**

(30) Priority: 31.10.2005 KR 20050102765
(71) Applicant: Samsung Electronics Co., Ltd., Suwon-si, Gyeonggi-Do (KR)
(72) Inventor: Kim, Su-Jin, Gyeonggi-do (KR); Kim, Eun-Ju, Gyeonggi-do (KR)
(74) Representative: Grünecker, Kinkeldey, Stockmair & Schwanhäusser Anwaltssozietät

(57) **Abstract**

An apparatus and method for transmitting a handwritten data during a messenger conversation in a mobile communication terminal. The method includes disabling a key input function of a keypad to receive handwritten data when a handwriting mode is set; driving a pressure sensor for sensing pressing of the keypad; determining whether handwritten data is input through the pressure sensor; displaying input handwritten data on a display unit when handwritten data is input through the pressure sensor; and transmitting the handwritten data. Accordingly, the mobile communication terminal can recognize and transmit handwritten data, such as text or image data, thus making it possible to express a user's personality. In addition, an image edit function can make it possible to easily transfer information that is difficult to express through simple texts. Furthermore, mobile communication terminals can receive handwritten text or image data without a specific apparatus.

## Description

The present invention generally relates to an apparatus and method for recognizing and transmitting handwritten data in a mobile communication terminal, and in particular, to an apparatus and method for transmitting handwritten data input through a glide sensor during a messenger conversation in a mobile communication terminal, thereby expressing a user's personality.

The use of mobile communication terminals is widespread because of their portability. Accordingly, service providers and mobile terminal manufacturers are competitively developing mobile communication terminals with more convenient functions in order to attract more users.

Mobile communication terminals normally provide a variety of additional functions and services, such as a phone book function, a game function, a scheduler function, a short message service, a multimedia message service, a cell broadcasting service, an Internet service, an e-mail service, a morning call function, an MPEG Layer 3 (MP3) function, a digital camera function, and so on.

Among the additional functions and services, the short message service is most widely used. Due to the recent tendency to prefer a short message service rather than a call function, mobile communication terminals provide various message services, such as a multimedia message service, a cell broadcasting service, and an e-mail service, in addition to a short message service.

Although message services of mobile communication terminals have been expanded, they take a relatively long time to receive and send a message. Thus, there is great interest in mobile messenger services that can send and receive a message in real time.

However, most message services including mobile messenger services cannot sufficiently express a user's personality because their functions are very similar to one another. In addition, data communication speed has to increase to improve messenger service value.

Therefore, a need exists for technical support that can provide various fonts and images and increase data input speed.

The present invention has been designed to substantially solve at least the above problems and/or disadvantages and to provide at least the advantages below. It is the object of the present invention to provide an apparatus and method for recognizing and transmitting handwritten data in a mobile communication terminal.
This object is solved by the subject matter of the independent claims.
Preferred embodiments are defined by the subject matter of the dependent claims.

An aspect of the present invention is to provide an apparatus and method for inputting handwritten data through a glide sensor during a messenger conversation and transmitting the input handwritten data in a mobile communication terminal, thereby increasing data input speed and expressing a user's personality.

A further aspect of the present invention is to provide an apparatus and method for easily inputting information that is difficult to express through simple texts by providing a function of editing handwritten data in various ways.

According to one aspect of the present invention, a method for transmitting handwritten data in a mobile communication terminal includes disabling a key input function of a keypad to receive handwritten data when a handwriting mode is set; driving a pressure sensor for sensing a pressing of the keypad; determining whether the handwritten data is input through the pressure sensor; displaying input handwritten data on a display unit when the handwritten data is input through the pressure sensor; and transmitting the handwritten data.

According to another aspect of the present invention, an apparatus for sensing handwritten data in a mobile communication terminal includes a keypad for transmitting a pressing of the keypad; a pressure sensor for sensing pressure generated by pressing the keypad; and a controller for recognizing sensed pressure to generate handwritten data.

The present invention will become more apparent from the following detailed description when taken in conjunction with the accompanying drawings in which:
FIG 1 is a block diagram of a mobile communication terminal according to the present invention;
FIG. 2 is a flowchart illustrating a method for recognizing and transmitting handwritten data during a messenger conversation in a mobile communication terminal according to the present invention; and
FIGs. 3A and 3B are diagrams of a display screen in which a message is input in a handwriting mode during a messenger conversation in a mobile communication terminal according to the present invention.

Preferred embodiments of the present invention will be described herein below with reference to the accompanying drawings. In the following description, well-known functions or constructions are not described in detail because they would obscure the present invention in unnecessary detail.

The present invention provides an apparatus and method for transmitting handwritten data input through a pressure sensor during a messenger conversation in a mobile communication terminal. Handwritten data means text or image data that are written by a user's hand.

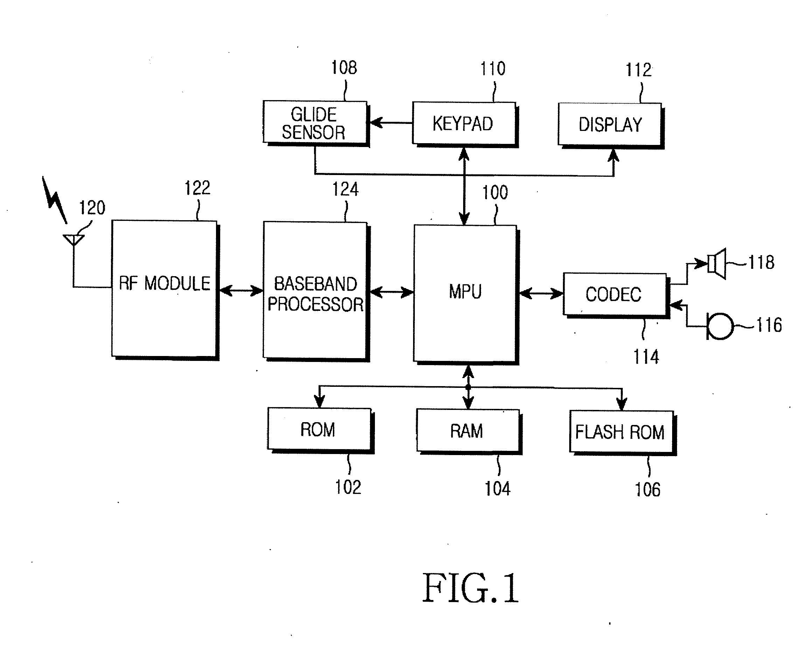

FIG. 1 is a block diagram of a mobile communication terminal according to the present invention. Mobile communication terminal examples may include, but not limited to, a cellular phone, a Personal Communication System (PCS) terminal, a Personal Data Assistant (PDA), an International Mobile Telecommunications-2000 (IMT-2000) terminal, etc. The following descriptions will be made with a general structure of the above terminals.

The mobile communication terminal includes a controller (e.g., a microprocessor unit (MPU)) 100, a read only memory (ROM) 102, a random access memory (RAM) 104, a flash ROM 106, a glide sensor 108, a keypad 110, a display unit 112, a coder-decoder (CODEC) 114, a microphone 116, a speaker 118, an antenna 120, a radio frequency (RF) module 122, and a baseband processor 124.

Controller 100 controls an overall operation of the mobile communication terminal. For example, controller 100 processes and controls voice communication and data communication. In addition, controller 100 performs a function of recognizing/editing/transmitting handwritten data input through a pressure sensor. Handwritten data can be input by a stylus pen or a hand through a touch screen or a touch screen. A detailed description about the general control operation of controller 100 will be omitted for conciseness.

ROM 102 stores a variety of reference data and microcodes of a program for the process and control operation of controller 100. According to the present invention, ROM 102 stores a program for recognizing handwritten data input through the pressure sensor, a program for editing input handwritten data, and a program for transmitting input handwritten data to several conversation partners in a messenger conversation. RAM 104 is a working memory of controller 100, and stores temporary data generated during operations. Flash ROM 106 stores a variety of updatable data, such as a phone book, an outgoing message, an incoming message, etc.

Keypad 110 includes numeric keys of digits 0-9 and a plurality of function keys, such as a Menu key, a Cancel (Delete) key, a Confirmation key, a Talk key, an End key, an Internet connection key, Navigation keys (or direction keys), a character input key, etc., to provide key input data that corresponds to a key pressed by a user to controller 100. In a handwriting mode, however, functions of keys of keypad 110 are disabled under control of controller 100. Instead, keypad 110 performs an operation of applying pressure to glider sensor 108. Or, in a handwriting mode, a function of inputting handwritten data by a stylus pen or a hand through a touch screen or a touch screen may be activated. In this case, it is not necessary to disable function of keypad 110.

Glide sensor 108 is a pressure sensor. Glide sensor 108 is mounted under keypad 110 to sense pressure generated when a user presses keypad 110. Glide sensor 108 can provide handwritten data to controller 100 by recognizing a pressed position of keypad 110.

Display unit 112 displays status information generated during operations, numerals and characters, moving pictures and still pictures, and so on. Display unit 112 may be a color liquid crystal display (LCD). In addition, display unit 112 displays text or image input through glide sensor 108.

CODEC 114 is connected to controller 100, and microphone 116 and speaker 118 are connected to CODEC 114. CODEC 114, microphone 116, and speaker 118 serve as an audio input/output block for telephone conversation and voice recording. CODEC 114 converts Pulse Code Modulation (PCM) data received from controller 100 into analog audio signal to output the analog audio signal to speaker 118, and converts audio signal received through microphone 116 into PCM data to provide the PCM data to controller 100.

RF module 122 down-converts an RF signal received through antenna 120 to provide the down-converted signal to the baseband processor 124, and up-converts a baseband signal from baseband processor 124 to transmit the up-converted signal through antenna 120. Baseband processor 124 processes a baseband signal transmitted/received between RF module 122 and controller 100. For example, during a transmission operation, baseband processor 124 channel-codes and spreads data to be transmitted. During a reception operation, baseband processor 124 despreads and channel-decodes a received data.

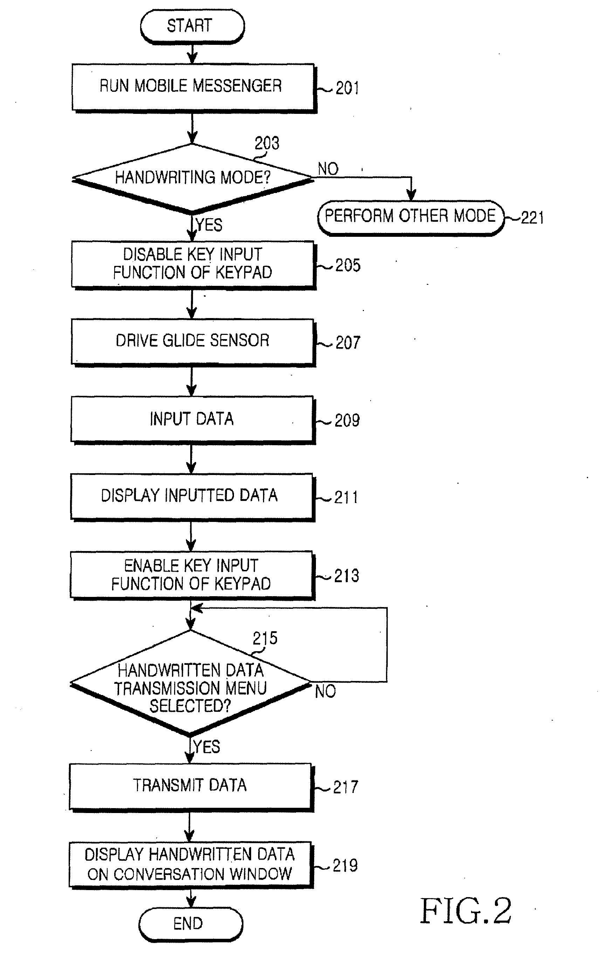

FIG. 2 shows a method for recognizing and transmitting handwritten data during a messenger conversation in a mobile communication terminal according to the present invention.

Controller 100 determines whether the mobile communication terminal is connected to a mobile messenger in step 201.

In step 203, controller 100 determines whether a current mode is a handwriting mode that allows a user to input text or image data using his or her hand. When the current mode is not the handwriting mode in step 203, controller 100 performs another mode (e.g., a keypad mode) in step 221.

When the handwriting mode is set in step 203, controller 100 disables the function of the alphanumeric keys in step 205. That is, although keys of keypad 110 are selected, controller 110 disables the key input functions to sense pressure generated when keypad 110 is pressed through glide sensor 108 mounted under keypad 110, so that functions of the alphanumeric keys are not performed. However, if, in a handwriting mode, a function of inputting handwritten data by a stylus pen or a hand through a touch screen or a touch screen is activated, it is not necessary to disable the function of alphanumeric keys of keypad 110.

In step 207, controller 100 drives glide sensor 108 for sensing pressure to receive handwritten data. That is, glide sensor 108 can sense input of handwritten data by sensing generated pressure.

In step 209, controller 100 determines whether handwritten data is input through glide sensor 108. That is, controller 100 recognizes input of handwritten data by using glide sensor 108 to sense a position of pressure generated when keypad 110 is pressed by a user's hand or a pen. The handwritten data can be input in a state that image effects, such as line color, line thickness, diagrams, etc., are previously set.

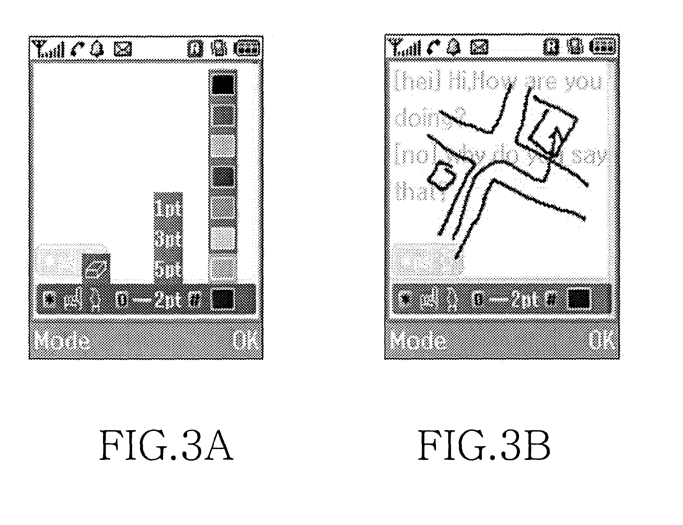

As illustrated in FIGs. 3A and 3B, input handwritten data can be edited using an image edit function including a color setting, a thickness setting, a delete menu, and so on. For example, when a user wants to transmit a route map of an appointed place to a participant during a mobile messenger conversation, he or she can draw the route map using the image edit function.

Referring to FIG 3A, when handwritten data is input through glide sensor 108, controller 100 displays the handwritten data on an input window for the mobile messenger conversation in step 211. The displayed handwritten data can be edited using the image edit function, such as a delete function, a zoom-in function, a zoom-out function, etc.

Controller 100 enables the function of alphanumeric keys in step 213 and determines whether a handwritten data transmission menu is selected in step 215. That is, controller 100 determines whether the transmission menu for transmitting input handwritten data to a terminal of the conversation participant is selected.

When the handwritten data transmission menu is selected, controller 100 transmits the input handwritten data in step 217. That is, controller 100 transmits handwritten data to which a specific code is added, so that the mobile communication terminal receiving the handwritten data can recognize the received data as the handwritten data. Also, the handwritten data can be simultaneously transmitted to several participants in the messenger conversation.

Referring to FIG. 3B, controller 100 displays the handwritten data on the conversation window of the mobile messenger in step 219. Thereafter, controller 100 terminates the process.

While the use of handwritten data has been described with respect to the mobile messenger conversation, handwritten data can also be applied to all additional services (e.g., message, scheduler, note pad, etc.), attributing to improvement of text input speed.

While a glide sensor needs to be mounted to input handwritten data, a glides sensor is not required for merely receiving and displaying handwritten data.

As an another example of a method for transmitting handwritten data in a mobile communication terminal may comprises sensing an input of handwritten data when a handwriting mode is set and transmitting the input handwritten data to another mobile communication terminal which is already communicating with the mobile communication terminal. The method may further comprise the step of displaying the input handwritten data on a display unit just after the step of sensing the input of handwritten data. Here, the handwritten data may be input by pressing a keypad. Also, the input handwritten data may be editable using an image edit function including an erase function, a zoom-in function, and a zoom-out function. The handwritten data are simultaneously transmitted to conversation participants if there are a plurality of conversation participants.

As an another example of a mobile communication terminal for transmitting handwritten data in a mobile communication terminal may comprise a sensing means for sensing an input of handwritten data when a handwriting mode is set, and a controller for transmitting the input handwritten data to another mobile communication terminal which is already communicating with the mobile communication terminal. Here, the sensing means may be the touch screen or the touch pad. The controller may further perform displaying the input handwritten data on a display unit just after sensing the input of handwritten data. Also, the input handwritten data may be editable using an image edit function including an erase function, a zoom-in function, and a zoom-out function.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

As described above, a mobile communication terminal according to the present invention can recognize and transmit handwritten data, for example text or image data, thus making it possible to express a user's personality. In addition, an image edit function can make it possible to easily transfer information that is difficult to express through simple texts. Furthermore, text input speed can be increased through use of handwriting rather than a keypad. Moreover, mobile communication terminals can receive handwritten text or image data without a specific apparatus.

While the present invention has been shown and described with reference to certain preferred embodiments thereof, it will be understood by those skilled in the art that various changes in form and details may be made therein without departing from the scope of the present invention as defined by the appended claims.

## Claims

1. A method for transmitting handwritten data in a mobile communication terminal, comprising the steps of:
disabling a key input function of a keypad to receive handwritten data when a handwriting mode is set;
driving a pressure sensor for sensing pressing of the keypad;
determining whether handwritten data is input through the pressure sensor;
displaying input handwritten data on a display unit when handwritten data is input through the pressure sensor; and
transmitting the handwritten data.

2. The method of claim 1, wherein the handwritten data is produced by sensing pressure generated the pressing the keypad.

3. The method of claim 1 or 2, wherein the handwritten data is input using an image effect function including a color setting function, a line thickness setting function, and a symbol input function.

4. The method of one of claims 1 to 3, wherein the input handwritten data is editable using an image edit function including an erase function, a zoom-in function, and a zoom-out function.

5. The method of one of claims 1 to 4, wherein the handwritten data is applicable to additional services that allow a user to input data, the additional services including a message, a scheduler, a note pad, and a mobile messenger.

6. The method of one of claims 1 to 5, wherein the handwritten data is simultaneously transmitted to conversation participants when there are a plurality of conversation participants.

7. The method of one of claims 1 to 6, further comprising enabling the key input function of the keypad when the input handwritten data is displayed on the display unit.

8. An apparatus for sensing handwritten data in a mobile communication terminal, the apparatus comprising:
a keypad for transmitting pressing of the keypad;
a pressure sensor for sensing a pressure generated by pressing the keypad; and
a controller for recognizing sensed pressure to generate handwritten data.

9. The apparatus of claim 8, wherein the keypad includes alphanumeric keys, and a key input function of the keypad is disabled in a handwriting mode so pressing the keypad is transmitted to the pressure sensor.

10. A method for transmitting handwritten data in a mobile communication terminal, comprising the steps of:
sensing an input of handwritten data when a handwriting mode is set; and
transmitting the input handwritten data to another mobile communication terminal which is already communicating with the mobile communication terminal.

11. The method of claim 10, further comprising the step of displaying the input handwritten data on a display unit just after the step of sensing the input of handwritten data.

12. The method of claim 10 or 11, wherein the handwritten data is input by pressing a keypad.

13. The method of one of claims 10 to 12, wherein the input handwritten data is editable using an image edit function including an erase function, a zoom-in function, and a zoom-out function.

14. The method of one of claims 10 to 13, wherein the handwritten data are simultaneously transmitted to conversation participants when there are a plurality of conversation participants.

15. A mobile communication terminal for transmitting handwritten data comprising:
a sensing means for sensing an input of handwritten data when a handwriting mode is set; and
a controller for transmitting the input handwritten data to another mobile communication terminal which is already communicating with the mobile communication terminal.

16. The mobile communication terminal of claim 15, wherein the controller further performs displaying the input handwritten data on a display unit just after sensing the input of handwritten data.

17. The mobile communication terminal of claim 15 or 16, wherein the input handwritten data is editable using an image edit function including an erase function, a zoom-in function, and a zoom-out function.

18. A computer-readable recording medium having recorded thereon a program for transmitting handwritten data in a mobile communication terminal, comprising:
a first code segment, for sensing an input of handwritten data when a handwriting mode is set; and
a second code segment, for transmitting the input handwritten data to another mobile communication terminal which is already communicating with the mobile communication terminal.
